# EUROPÄISCHE PATENTSCHRIFT

(11) **EP 2 826 094 B1**
(45) Veröffentlichungstag und Bekanntmachung des Hinweises auf die Patenterteilung: **04.05.2016**
(21) Anmeldenummer: 13710367.7
(22) Anmeldetag: 13.03.2013
(51) Int. Cl.: F23L 15/04, H01M 12/08, H01M 8/04

(54) **DAMPFKRAFTWERKINTEGRIERTE HOCHTEMPERATUR-BATTERIE**
HIGH-TEMPERATURE BATTERY INTEGRATED INTO A STEAM POWER STATION
BATTERIE HAUTE TEMPÉRATURE INTÉGRÉE À UNE CENTRALE THERMIQUE À VAPEUR

(30) Priorität: 16.03.2012 DE 102012204210
(43) Veröffentlichungstag der Anmeldung: 21.01.2015
(73) Patentinhaber: Siemens Aktiengesellschaft, 80333 München (DE)
(72) Erfinder: BRUNHUBER, Christian, 91275 Auerbach (DE); GRAEBER, Carsten, 91056 Erlangen (DE); ZIMMERMANN, Gerhard, 91315 Höchstadt/Aisch (DE)
(86) Internationale Anmeldenummer: PCT/EP2013/055151
(87) Internationale Veröffentlichungsnummer: WO 2013/135772

(56) Entgegenhaltungen:
- WO-A2-2006/081033
- DE-A1-102006 050 990
- US-A- 4 743 517
- US-A1- 2010 266 908

## Beschreibung

Die Erfindung betrifft ein Dampfkraftwerk umfassend einen Dampfkessel, der von einer Brennervorrichtung in einer Brennkammer befeuert werden kann, sowie einen Luftvorwärmer, der geeignet ist, thermische Energie aus dem Rauchgas der Brennkammer zu entnehmen, um sie auf einen ersten Luftstrom zu übertragen, welcher erste Luftstrom der Brennkammer wenigstens zum Teil als Verbrennungsluft wieder zugeführt wird, gemäß dem Oberbegriff von Patentanspruch 1. Weiter betrifft die vorliegende Erfindung ein Verfahren zum Betrieb eines solchen Dampfkraftwerks gemäß dem Oberbegriff von Patentanspruch 13.

Fossil befeuerte Dampfkraftwerke dienen vornehmlich zur Deckung der Grundlast bei der öffentlichen Stromversorgung, also der Belastung des öffentlichen Stromnetzes durch Stromnachfrage, die in einem Tagesmittel typischerweise nicht unterschritten wird. Als solche sind insbesondere durch Öl oder Kohle befeuerte Dampfkraftwerke zu nennen. Zur Deckung weiterer Strombedarfsmengen werden bei entsprechender Nachfrage Mittel- bzw. Spitzenkraftwerke eingesetzt.

Die mit Öl bzw. Kohle befeuerten Dampfkraftwerke werden aufgrund der hohen Betriebsfixkosten sowie der relativ niedrigen Brennstoffkosten als Grundlastkraftwerke betrieben. Sie werden im Betrieb grundlasttypisch vorzugsweise im oberen Lastbereich rund um die Uhr betrieben. Ebenso können sie sich, je nach technischer Auslegung, auch aufgrund ihrer verhältnismäßig vorteilhaften Anfahrgeschwindigkeiten bzw. schnellen Regelbarkeit als Mittellastkraftwerke eignen.

Da derartige Dampfkraftwerke vorzugsweise im Dauerbetrieb eingesetzt werden, eignen sie sich besonders während Zeiten der geringen Stromnachfrage zur Einspeisung in Zwischenspeichersysteme, aus welchen die elektrische Energie bei erneuter Stromnachfrage schnell wieder bereitgestellt werden kann. Kraftwerke in denen ein System zur Erzeugung elektrischer Energie mittels Dampf mit einem elektrochemischen Energiespeicher bzw. einem elektrochemischen Energieerzeugungssystem kombiniert wird, sind aus den folgenden Patentschriften bekannt: 1. US 2010/0266908 A1; 2. DE 10 2006 050 990 A1; 3. US 4,743,517 4. WO 2006/081033 A2.

Geeignete Zwischenspeichersystme sind bspw. industrielle, elektrische Batterien, die in der Lage sind, Kraftwerkleistungen an elektrischer Energie in elektrischer Form zu speichern. In Verbindung mit der Bereitstellung von elektrischer Energie in den öffentlichen Stromnetzen hat sich hierbei insbesondere die Hochtemperatur-Batterie-Technik als geeignet herausgestellt.

Als Hochtemperatur-Batterien sollen hierbei solche Batterien verstanden werden, welche geeignet sind, Kraftwerkskapazitäten an elektrischer Leistung zwischenzuspeichern, um diese bei Bedarf in ausreichender Menge an das öffentliche Stromnetz wieder abgeben zu können. Ferner sollen die Betriebstemperaturen dieser Hochtemperatur-Batterien wenigstens bei 100 °C, bevorzugt bei mehr als 250 °C und ganz besonders bevorzugt bei mehr als 500 °C liegen. Bevorzugt sind Hochtemperatur-Batterien Festelektrolyt-Batterien mit einer oben bezeichneten Betriebstemperatur.

So eignet sich also bspw. die Natriumschwefel-Zelle (Na-S-Akkumulator) dazu, auch größere Mengen an elektrischer Leistung zwischenzuspeichern. Diese kann bei Spitzenlastzeiten bzw. zur Netzstabilisierung im öffentlichen Stromnetz sehr kurzfristig wieder abgegeben werden. Eine weitere Hochtemperatur-Batterie-Technik, die sich zur Versorgung in Spitzenlastzeiten eignet, ist eine von der Anmelderin entwickelte Metall-Luft-Batterie, wie sie etwa in der DE 10 2009 057 720 A1 beschrieben wird. Der Inhalt dieser Schrift sei hiermit ausdrücklich durch Bezugnahme in diese vorliegende Anmeldung mit aufgenommen. Diese Metall-Luft-Batterie zeichnet sich durch das Vorliegen eines oxidierbaren Materials, bevorzugt metallisches Material, wie bspw. Eisen, aus, welches beim Entladen der Batterie durch Wasserdampf oxidiert wird. Die Leistungsabgabe der Batterie basiert zudem auf einer kathodenseitigen Prozessgaszuführung, die typischerweise mit Luft als Prozessgas versorgt wird. Der in der Luft vorhandene Sauerstoff wird hierbei während eines Entladezustands an der Kathode reduziert und durch einen gasdichten Festkörperelektrolyten, welcher Kathode und Anode trennt, in den Anodenbereich transportiert. Dort erfolgt eine Oxidation des reduzierten Sauerstoffs, wobei die frei werdende elektrische Ladung als elektrische Leistung über Kontakte abgegriffen werden kann. Damit der Festkörperelektrolyt seine ionische Leitfähigkeit in einem Betriebszustand gewährleisten kann, erfordert die Funktionsfähigkeit der Metall-Luft-Batterie eine Mindesttemperatur, welche für einen wirtschaftlichen Betrieb nicht unterschritten werden kann.

Gemeinsam ist allen Hochtemperatur-Batterien, dass sie für einen wirtschaftlichen Betrieb die Versorgung mit thermischer Energie erfordern. Um diese bereitzustellen, werden typischerweise elektrische Heizsysteme als Wärmequellen in die jeweiligen Batterien integriert, um diese auf Betriebstemperatur bringen bzw. halten zu können. Dies stellt sich jedoch in einer Gesamtbetrachtung der aufzuwendenden elektrischen Leistungen oftmals als wirtschaftlich unrentabel heraus, da die Versorgung mit elektrischer Energie sich durch unerwünschte Verlustleistungen bei der Herstellung, Bereitstellung und Zwischenspeicherung auszeichnet.

Zu diesen Verlustleistungen sind zudem auch noch thermische Verluste hinzu zu rechnen, da die Betriebstemperaturen von etwa mehr als 250 °C bzw. von mehr als 500 °C nicht nur einen hohen Versorgungsaufwand zur Bereitstellung der aus elektrischer Energie gewonnenen thermischen Energie bedeuten, sondern ebenfalls einen hohen Isolationsaufwand erfordern, um die thermischen Verluste möglichst gering zu halten.

Der vorliegenden Erfindung liegt folglich die Aufgabe zugrunde, die aus dem Stand der Technik bekannten Nachteile zu vermeiden. Insbesondere ist es die Erfindungsaufgabe, eine relativ ineffiziente Versorgung einer Hochtemperatur-Batterie durch thermische Energie, welche unmittelbar aus elektrischer Energie gewonnen wird, zu vermeiden. Ferner soll ein Strombereitstellungskonzept vorgeschlagen werden, welches einen energieeffizienten Betrieb solcher Hochtemperatur-Batterien erlaubt. Bevorzugt betrifft ein derartiges Konzept die Integration einer Hochtemperatur-Batterie in einem Dampfkraftwerk zur geeigneten Versorgung der Hochtemperatur-Batterie mit Energie.

Erfindungsgemäß wird diese Aufgabe durch ein Dampfkraftwerk gemäß Patentanspruch 1 sowie durch ein Verfahren zum Betrieb eines solchen Dampfkraftwerkes gemäß Patentanspruch 13 gelöst.

Insbesondere wird die Aufgabe gelöst durch ein Dampfkraftwerk umfassend einen Dampfkessel, der von einer Brennervorrichtung einer Brennkammer befeuert wird sowie einen Luftvorwärmer, der geeignet ist, thermische Energie aus dem Rauchgas der Brennkammer zu entnehmen, um sie auf einen ersten Luftstrom zu übertragen, welcher erste Luftstrom der Brennkammer wenigstens zum Teil als Verbrennungsluft wieder zugeführt wird, wobei das Dampfkraftwerk weiterhin eine Hochtemperatur-Batterie umfasst, die ebenfalls mit Luft aus dem ersten Luftstrom versorgt wird.

Ebenso wird die der Erfindung zugrundeliegende Aufgabe durch ein Verfahren zum Betrieb eines solchen Dampfkraftwerks gelöst, wobei insbesondere die Hochtemperatur-Batterie in einem Betriebszustand mit Luft aus dem ersten Luftstrom versorgt wird.

Erfindungsgemäß wird also thermische Energie aus dem Rauchgas der Brennkammer entnommen, die wenigstens teilweise auf einen ersten Luftstrom übertragen wird, wobei die thermische Energie aus diesem ersten Luftstrom zur Versorgung der Hochtemperatur-Batterie bereitgestellt wird. Demgemäß wird die für den Betrieb der Hochtemperatur-Batterie erforderliche thermische Energie vollständig oder wenigstens teilweise aus dem Rauchgas entnommen. Damit werden jedoch elektrisch betriebene Wärmevorrichtungen in den Hochtemperatur-Batterien zur Erreichung einer Betriebstemperatur überflüssig bzw. können unter verhältnismäßig geringerer Leistungsabgabe betrieben werden. Die Versorgung der in den Dampfkraftwerksprozess integrierten Hochtemperatur-Batterie mittels thermischer Energie aus dem ersten Luftstrom wird typischerweise durch die Entnahme einer geeigneten Menge an Luft aus dem ersten Luftstrom erreicht. So ist es ausführungsgemäß in etwa denkbar, dass der erste Luftstrom durch Vorsehen geeigneter Luftleitungen geteilt wird, wobei ein Teil des ersten Luftstroms der Brennkammer wiederum als Verbrennungsluft zugeführt wird, ein anderer Teil jedoch in geeigneter Weise der Hochtemperatur-Batterie zugeleitet wird. Durch geeignete strömungstechnische und/oder thermische Regelung kann zudem so die Menge an thermischer Energie, welche der Hochtemperatur-Batterie zugeführt wird, geeignet eingestellt werden.

Weiterhin erweist sich die Anordnung der Hochtemperatur-Batterie in dem Kraftwerksverbund als sonderlich vorteilhaft, da so auch die thermischen bzw. elektrischen Verlustleistungen bei der Versorgung der Hochtemperatur-Batterie weitgehend gering gehalten werden können. Insofern lässt die erfindungsgemäße kraftwerksintegrierte Lösung auch einen merklich verbesserten Wirkungsgrad erwarten.

Gemäß einer ersten bevorzugten Ausführungsform der vorliegenden Erfindung ist vorgesehen, dass die Luft aus dem ersten Luftstrom, welche die Hochtemperatur-Batterie versorgt, bei regulärem Betrieb der Brennervorrichtung ein Temperaturniveau von wenigstens 250 °C, bevorzugt von wenigstens 300 °C aufweist. Dadurch kann beispielsweise gewährleistet werden, dass auch eine Natriumschwefel-Zelle, welche typischerweise Betriebstemperaturen von 250 °C bis 300 °C erfordert, vorteilhaft betrieben werden kann. Insbesondere werden zur notwendigen Ereichung der Betriebstemperatur einer Natriumschwefel-Zelle keine weiteren Heizvorrichtungen mehr benötigt. Dies erlaubt folglich eine Verringerung des Aufwandes hinsichtlich erforderlicher Heizvorrichtungen bei der Bereitstellung wie auch bei dem Betrieb derselben. Da durch die Integration der Hochtemperatur-Batterie in das Dampfkraftwerk auch die thermischen Verlustleistungen verhältnismäßig gering gehalten werden können, stellt sich die ausführungsgemäße Integrationslösung als besonders vorteilhaft heraus.

Gemäß einer weiteren bevorzugten Ausführungsform ist vorgesehen, dass die Luft aus dem ersten Luftstrom, mit welchem die Hochtemperatur-Batterie versorgt wird, nach thermischer Wechselwirkung mit der Hochtemperatur-Batterie, insbesondere nach einer thermischen und/oder chemischen Wechselwirkung, einer Kohlenmühle zugeführt wird. Ausführungsgemäß sind hierzu geeignete Zuführmittel vorgesehen. Die Wechselwirkung erfolgt hierbei typischerweise innerhalb der Hochtemperatur-Batterie, wobei die Luft anschließend der Kohlemühle zugeleitet wird. Die thermische Energie aus der Luft dient hierbei insbesondere zur Trocknung bzw. zur Inertisierung des Kohlenstaubs. Weiter kann die Luft auch in geeigneter Weise zum Transport des Kohlenstaubs von der Kohlenmühle in die Brennkammer vorgesehen sein. Je nach Betriebszustand der Hochtemperatur-Batterie kann der Luft eine unterschiedliche Menge an thermischer Energie zu bzw. auch abgeführt werden, so dass Temperaturschwankungen bei Zuführung in die Kohlenmühle auftreten können.

Wird bspw. die oben beschriebene Metall-Luft-Batterie während des Entladungszustandes mit Luft aus dem ersten Luftstrom versorgt, so wird der Energiegehalt der Luft aufgrund der in der Metall-Luft-Batterie stattfindenden exothermen Reaktionen sogar noch erhöht. Die Luft kann also nach dem Austreten aus der Hochtemperatur-Batterie im Vergleich zum Zeitpunkt des Eintritts in diese eine höhere Temperatur aufweisen. Anders kann es sich jedoch verhalten, wenn die Hochtemperatur-Batterie etwa zu einem Zeitpunkt des Ladezustandes vornehmlich thermische Energie aufnimmt, und damit den Energiegehalt der Luft vermindert. Eine geringfügige Änderung der Temperatur steht auch zu erwarten, wenn die Hochtemperatur-Batterie in einem Stand-by-Zustand weder geladen noch entladen wird.

Dient die Luft aus dem ersten Luftstrom also in erster Linie zur Versorgung der Hochtemperatur-Batterie mit thermischer Energie, so kann sie auch gleichzeitig die Funktion eines Transportmediums erfüllen, um etwa thermische Energie aus der Hochtemperatur-Batterie abzuführen. Ausführungsgemäß wird die aus der Hochtemperatur-Batterie abgeführte Luft des ersten Luftstroms einer Kohlenmühle zugeführt, so dass die darin aufgenommene thermische Energie nachfolgend in geeigneter Weise genutzt werden kann. Eine besonders effiziente Nutzung stellt sich insbesondere dann ein, wenn zusätzliche thermische Energie aus der Hochtemperatur-Batterie mittels dieses Luftstromes abgeführt und der Kohlenmühle zugeführt werden kann.

Gemäß einer Weiterführung dieser Ausführungsform kann somit vorgesehen sein, dass die Luft nach thermischer Wechselwirkung mit der sich im Betrieb befindlichen Hochtemperatur-Batterie ein höheres Temperaturniveau aufweist als vor der thermischen Wechselwirkung mit der Hochtemperatur-Batterie. Wie oben bereits ausgeführt, kann sich ein solches höheres Temperaturniveau insbesondere bei einem Entladezustand der weiter oben beschriebenen Metall-Luft-Batterie einstellen. Gemäß einer weiteren Ausführungsform kann vorgesehen sein, dass die aus der Hochtemperatur-Batterie entnommene Luft, welche der Kohlenmühle zugeführt wird, hinsichtlich seiner Flussmenge gesteuert oder geregelt eingestellt wird, um so den Wärmeeintrag in die Kohlenmühle besonders vorteilhaft zu gestalten.

Gemäß einer weiteren Ausführungsform der Erfindung ist es denkbar, dass die Kohlenmühle mit einem zweiten Luftstrom versorgt wird, welcher ein relativ geringeres Temperaturniveau als der erste Luftstrom aufweist. Vorzugsweise werden der erste Luftstrom und der zweite Luftstrom vor Zuführung in die Kohlenmühle miteinander vermischt. Hierbei erfolgt typischerweise die Vermischung in einem geeigneten Mischraum bzw. alternativ in der Kohlenmühle selbst, falls keine Mischung vor Zuführung in die Kohlenmühle vorgesehen ist. Durch die Bereitstellung zweier Luftströme auf unterschiedlichem Temperaturniveau kann die der Kohlenmühle zugeführte Wärme in geeigneter Weise eingestellt werden. Soll etwa der Kohlenmühle vermehrt thermische Energie zugeführt werden, so wäre anteilsmäßig der Teilfluss der Luft aus dem ersten Luftstrom zu vergrößern. Ebenso wäre der Teil der Luft aus dem zweiten Luftstrom entsprechend zu vergrößern, falls der Kohlenmühle eine relativ geringere Wärmemenge zugeführt werden soll. Durch geeignete Wahl der einzelnen Teilströme kann der Kohlenmühle ausreichend thermische Energie zugeführt werden. Ebenso lassen sich bei geeigneter Einstellung die Flussmengen vorteilhaft einstellen.

Gemäß einer Weiterführung dieses Aspektes, kann vorgesehen sein, dass eine strömungstechnische Regelung vorgesehen ist, die gewährleistet, dass die Temperatur innerhalb der Kohlenmühle nach Mischung von Luft aus dem erstem Luftstrom und Luft aus dem zweitem Luftstrom nicht mehr als um 50 °C, bevorzugt nicht mehr als um 20 °C schwankt. Bei einer derartigen Schwankungsbreite kann die Aufbereitung des Kohlenstaubs in der Kohlenmühle besonders gleichmäßig erfolgen, wodurch auch eine im Zeitmittel gleichmäßigere Verbrennungstemperatur bei Verbrennung des Kohlenstaubs zu erwarten ist.

Gemäß einer besonders bevorzugten Ausführungsform der vorliegen Erfindung ist vorgesehen, dass der zweite Luftstrom vor Zuführung zur Kohlenmühle durch einen Wärmetauscher, insbesondere einem dampfbetriebenen Luftvorwärmer konditioniert wird. Der Wärmetauscher ist hierbei insbesondere geeignet, dem zweiten Luftstrom ausreichend thermische Energie zuzuführen, so dass dieser ein Temperaturniveau aufweist, welches nach Mischung mit Luft aus dem ersten Luftstrom ein Gesamttemperaturniveau hat, das geeignet zum Betrieb der Kohlenmühle ist. Durch die Bereitstellung von thermischer Energie durch den Wärmetauscher werden vor allem die Differenzen der Temperaturniveaus zwischen Luft aus dem ersten Luftstrom und Luft aus dem zweiten Luftstrom vorteilhaft ausgeglichen, so dass geringere Schwankungen nach Mischung beider Luftströme zu erwarten stehen.

Gemäß einem weiterführenden Aspekt dieser Ausführungsform ist vorgesehen, dass der Wärmetauscher dazu ausgebildet ist, die Luft thermisch zu konditionieren, insbesondere vorzuwärmen, die dem Luftvorwärmer als erster Luftstrom und nachfolgender Brennkammer als Verbrennungsluft zugeführt wird. Damit wird nicht nur der thermische Energiegehalt der Luft des ersten Luftstroms erhöht, sondern auch die thermische Gesamteffizienz des Dampfkraftwerks verbessert.

Gemäß einer weiteren vorteilhaften Ausführungsform des Dampfkraftwerks ist vorgesehen, dass die Luft aus dem ersten Luftstrom zur Versorgung der Hochtemperatur-Batterie zunächst der Hochtemperatur-Batterie und nach Wechselwirkung mit dieser insbesondere nach thermischer und/oder chemischer Wechselwirkung mit dieser, der Brennkammer als Verbrennungsluft zugeführt wird. Folglich wird die thermische Energie, die der Hochtemperatur-Batterie zur Verfügung gestellt worden ist, nicht mehr der Verbrennungsluft zur Verfügung stehen. Andererseits kann bei geeignetem Betrieb der Hochtemperatur-Batterie jedoch auch ein Wärmeeintrag in die Luft des ersten Luftstromes erfolgen, so dass die Verbrennungsluft einen höheren thermischen Energieinhalt aufweist. Demgemäß würde die Luft aus dem ersten Luftstrom ein höheres Temperaturniveau beim Einbringen in die Verbrennungskammer aufweisen. Dieser erhöhte thermische Energiegehalt kann auch eine verbesserte Verbrennungseffizienz zur Folge haben. Da jedoch die Hochtemperatur-Batterie je nach Betriebszustand unterschiedliche Mengen an thermischer Energie aus der Luft des ersten Luftstroms entnehmen bzw. dieser zuführen kann und damit das Temperaturniveau der Luft schwankt, ist besonderes Augenmerk auf die geeignete thermische Aufbereitung der Verbrennungsluft zu legen. Denkbar ist hier etwa auch wie in den vorab beschriebenen Ausführungsformen eine Mischung mit einem weiteren Luftstrom, der mit der Luft aus dem ersten Luftstrom in der Art zusammengeführt wird, dass die Schwankungen des Temperaturniveaus der der Brennkammer zugeführten Verbrennungsluft vorteilhaft eingestellt ist.

Gemäß einer weiteren Ausführungsform des erfindungsgemäßen Dampfkraftwerkes ist vorgesehen, dass die Hochtemperatur-Batterie eine Metall-Luft-Batterie ist, die insbesondere Luftsauerstoff in einem Entladebetrieb durch chemische Reduktion verbraucht. Demgemäß würde die Luft aus dem ersten Luftstrom nicht nur zur Bereitstellung von thermischer Energie für die Hochtemperatur-Batterie dienen, sondern wäre gleichzeitig auch Prozessgas, welches sich im Laufe der Betriebszustände der Metall-Luft-Batterie hinsichtlich seiner Zusammensetzung verändern könnte. Folglich könnte die Luft des ersten Luftstroms zwei vorteilhafte Funktionen erfüllen.

Gemäß einer weiteren bevorzugten Ausführungsform ist vorgesehen, dass die Hochtemperatur-Batterie dazu ausgebildet ist, mit Wasserdampf versorgt zu werden, der durch die Verbrennungswärme in der Brennkammer thermisch aufbereitet wurde. Insbesondere in dem Fall, in welchem die Hochtemperatur-Batterie als Metall-Luft-Batterie ausgeführt ist, kann der Wasserdampf zusätzlich auch noch zur Bereitstellung eines Oxidationsmittels zur Oxidation von metallischen Speichermaterialien, bspw. von metallischem Eisen bzw. niederwertigem Eisenoxid, dienen. Das Wasser würde hierbei selbst im Laufe dieser Oxidation zu Wasserstoff reduziert. Um die Metall-Luft-Batterie mit zusätzlicher thermischer Energie zu versorgen, kann sich der Wasserdampf auf einem im Vergleich zum Temperaturniveau der Luft aus dem ersten Luftstrom höheren Temperaturniveau befinden. So ist es bspw. denkbar, dass Wasserdampf aus dem Dampfprozess bei Temperaturen von größer 300 °C, insbesondere von mehr als 500 °C ausgekoppelt wird, um der Metall-Luft-Batterie zugeführt zu werden. Ausführungsgemäß könnte die Hochtemperatur-Batterie somit mittels weiterer thermischer Energie versorgt werden, was einerseits die Betriebseffizienz der Hochtemperatur-Batterie steigern, und andererseits den Gesamtwirkungsgrad des Dampfkraftwerkes verbessern kann.

Gemäß einer bevorzugten Ausführungsform des erfindungsgemäßen Verfahrens kann vorgesehen sein, dass die Versorgung der Hochtemperatur-Batterie mit Luft aus dem ersten Luftstrom gesteuert bzw. geregelt in Abhängigkeit von dem Betriebszustand der Hochtemperatur-Batterie erfolgt. So kann bspw. mittels geeigneter Sensormittel der Betriebszustand der Hochtemperatur-Batterie erfasst werden, und im Anschluss daran, mittels geeigneter Steuer- bzw. Regelmittel eine geeignete Steuerung- bzw. Regelung der Luftmenge aus dem ersten Luftstrom erfolgen. Befindet sich die Hochtemperatur-Batterie bspw. in einem Ladezustand und erfordert einen relativ höheren Zutrag an thermischer Energie, könnte bspw. der Luftstrom, welcher der Hochtemperatur-Batterie zugeführt wird, erhöht werden. Andererseits ist denkbar, dass der Luftstrom und damit die Menge an thermischer Energie verringert wird, wenn sich die Hochtemperatur-Batterie etwa in einem Entladezustand befindet und aufgrund einer elektrochemischen Reaktionen selbst thermische Energie erzeugt.

Nachfolgend soll anhand von Figuren die Erfindung beispielhaft erläutert werden. Hierbei sind die Figuren nicht einschränkend in Bezug auf den allgemeinen Erfindungsgegenstand zu werten. Weiter sind die Figuren lediglich schematisch gehalten, um die Übersichtlichkeit zu wahren und die Verständnisfähigkeit zu verbessern. Dem Fachmann ist in der Lage, die in den Figuren dargestellten schematischen Anordnungen zu konkretisieren.

Hierbei zeigen die Figuren nachfolgend Folgendes:
- Fig. 1: eine erste Ausführungsform des erfindungsgemäßen Dampfkraftwerkes in einer schematischen Schaltansicht;
- Fig. 2: eine zweite Ausführungsform des erfindungsgemäßen Dampfkraftwerkes in einer schematischen Schaltansicht;
- Fig. 3: eine dritte Ausführungsform des erfindungsgemäßen Dampfkraftwerkes in einer schematischen Schaltansicht;

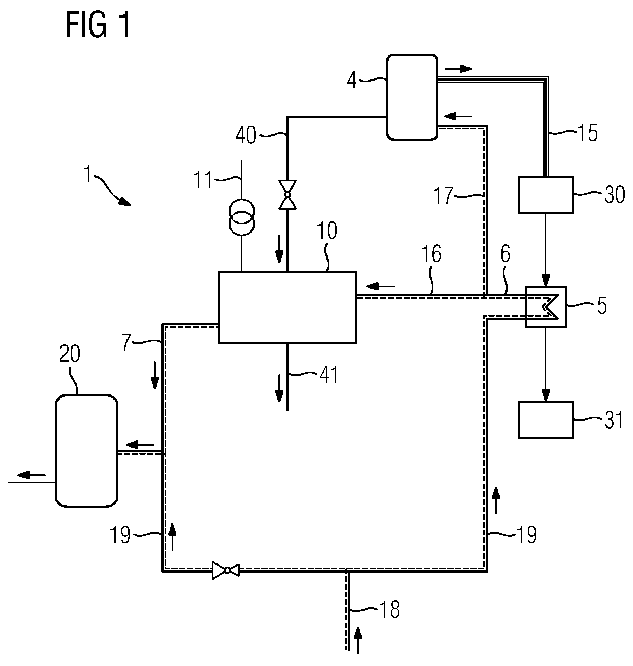

Fig. 1 zeigt eine erste Ausführungsform des erfindungsgemäßen Dampfkraftwerkes in einer schematischen Schaltansicht. Hierbei umfasst das Dampfkraftwerk 1 eine Brennkammer 4 mit einer nicht weiter bezeichneten und gezeigten Brennervorrichtung. Bei Betrieb der Brennervorrichtung entsteht Rauchgas in der Brennkammer 4 mit einem hohen thermischen Energieinhalt. Das Rauchgas wird bspw. mittels einer geeigneten Rauchgasleitung einer Entstickungsanlage 30 zugeführt. Um den thermischen Energiegehalt des Rauchgases für die weiteren Abläufe beim Betrieb des Dampfkraftwerkes nutzbar zu machen, wird ein Teil der thermischen Energie durch einen regenerativen Luftvorwärmer 5 im Sinne eines Wärmetauschers auf die Luft eines ersten Luftstroms 6 übertragen. Nach Abgabe der thermischen Energie kann das Rauchgas bspw. in einem Partikelabscheider 31 weiter aufbereitet werden, um später in die Umgebung entlassen zu werden.

Die Luft des ersten Luftstroms 6 kann bspw. aus einer Frischluftzuleitung 18 entnommen werden. Die Frischluft wird durch den Übertrag an thermischer Energie mittels des Luftvorwärmers 5 in Bezug auf seine Wärmemenge konditioniert. Das Temperaturniveau dieser so konditionierten Menge an Luft wird deutlich erhöht, so dass eine Temperatur von wenigstens 250 °C, bevorzugt von wenigstens 300 °C im ersten Luftstrom 6 zur Verfügung steht. Ein Teil des ersten Luftstroms 6 wird als Sekundärluft über eine geeignete Sekundärluftzuleitung 17 der Brennkammer erneut als thermisch konditionierte Verbrennungsluft zugeführt. Ein anderer Teil des ersten Luftstroms 6 wird als Primärluft mittels einer geeigneten Primärluftzuleitung 16 einer Hochtemperatur-Batterie 10 zugeleitet. Die der Primärluft innewohnende thermische Energie kann hierbei auf die Hochtemperatur-Batterie 10 durch Wechselwirkung übertragen werden. Je nach Betriebszustand dieser Hochtemperatur-Batterie 10 kann es aber auch möglich sein, dass auf die Primärluft nach thermischer Wechselwirkung mit der Hochtemperatur-Batterie 10 selbst zusätzliche thermische Energie übertragen wird. Nach erfolgter Wechselwirkung mit der Hochtemperatur-Batterie 10 wird die Primärluft einer Kohlenmühle 20 zugeführt, um die Kohlenstaubzubereitung zu ermöglichen. Insbesondere erfolgt eine Trocknung bzw. eine Inertisierung des Kohlenstaubs durch die Luftzufuhr.

Hierbei wird Frischluft aus einer Frischluftzuleitung 18 in zwei unterschiedliche Luftströme geteilt, wobei einer zur Aufnahme weiterer thermischer Energie aus dem regenerativen Luftvorwärmer 5 vorgesehen ist, der andere Luftstrom hingegen zur Zuführung an die Kohlenmühle 20. Um die Menge der an die Kohlenmühle 20 zugeführte Luft, bzw. der darin enthaltenen Wärme in geeigneter Weise einzustellen, können, wie in Fig. 1 angedeutet, geeignete Regel- oder Steuermittel, bevorzugt Ventile, vorgesehen sein. Diese sind in geeigneter Weise in die Luftzuleitung 19 eingebracht.

Die gezeigte Ausführungsform sieht vor, dass die Kohlenmühle 20 durch zwei unabhängige Luftströme versorgt wird, die vor Zuführung in die Kohlenmühle 20 miteinander gemischt werden. Einer davon ist der aus der Hochtemperatur-Batterie 10 austretende Luftstrom 7. Der andere Luftstrom ist der Teilstrom, welcher aus dem Frischluftstrom der Frischluftzuleitung 18 abgeteilt wurde. Hierbei weisen beide Luftströme typischerweise einen unterschiedlichen thermischen Energiegehalt aufweisen. Insbesondere dann, wenn der aus der Hochtemperatur-Batterie 10 entnommene Luftstrom 7 aufgrund von unterschiedlichen Betriebszuständen der Hochtemperatur-Batterie 10 selbst in seinem Energiegehalt schwankt, können derartige Schwankungsunterschiede durch den Luftstrom, welcher der Luftzuleitung 19 entnommen ist, in geeigneter Weise ausgeglichen werden. Durch geeignete Reglung- bzw. Steuerung der beiden Luftströme in Bezug aufeinander kann so die Schwankungsbreite der in die Kohlenmühle 20 eingeführten gesamtthermischen Energie relativ gering gehalten werden.

Bei Entladung der Hochtemperatur-Batterie 10 kann elektrische Energie an eine Stromnetzzuleitung 11 bereitgestellt werden. Andererseits ist es in einem Ladezustand der Hochtemperatur-Batterie 10 erforderlich, dass der Hochtemperatur-Batterie 10 über eine nicht weiter gezeigte Zuleitung elektrische Energie zur Verfügung gestellt wird.

Handelt es sich, wie in der vorliegenden Ausführungsform, bei der Hochtemperatur-Batterie 10 um eine weiter oben beschriebene Metall-Luft-Batterie, so kann diese weiterhin über eine Dampfzuleitung 40 mit Wasserdampf versorgt werden. Gemäß der vorliegenden Darstellung wird in der Brennkammer 4 bereiteter Dampf entnommen. Um die Menge an Dampf, welche der Hochtemperatur-Batterie 10 zur Verfügung gestellt wird, geeignet einstellen zu können, können in der Dampfzuleitung 40, wie schematisch angedeutet, geeignete Steuer- bzw. Regelmittel, insbesondere Ventile, vorgesehen sein. Ist der Wasserdampf in der Hochtemperatur-Batterie 10 nicht mehr weiter erforderlich bzw. soll dieser ausgetauscht werden, kann dieser mittels einer Dampfableitung 41 aus der Hochtemperatur-Batterie 10 entnommen werden.

Wie anhand der schematischen Darstellung in Fig. 1 deutlich wird, ermöglicht die dampfkraftwerkintegrierte Bereitstellung der Hochtemperatur-Batterie 10 eine geeignete Versorgung derselben mit thermischer Energie aus dem Rauchgas der Rauchgasleitung 15. Aufgrund der örtlichen Nähe von Brennkammer 4 und Hochtemperatur-Batterie 10 sind die thermischen Verluste bei der Bereitstellung von thermischer Energie mittels Luft aus dem ersten Luftstrom 6 vorteilhaft gering. Insbesondere kann durch die Integration der Hochtemperatur-Batterie 10 in das Dampfkraftwerk eine sehr vorteilhafte Erhöhung der Gesamteffizienz des Dampfkraftwerks erreicht werden.

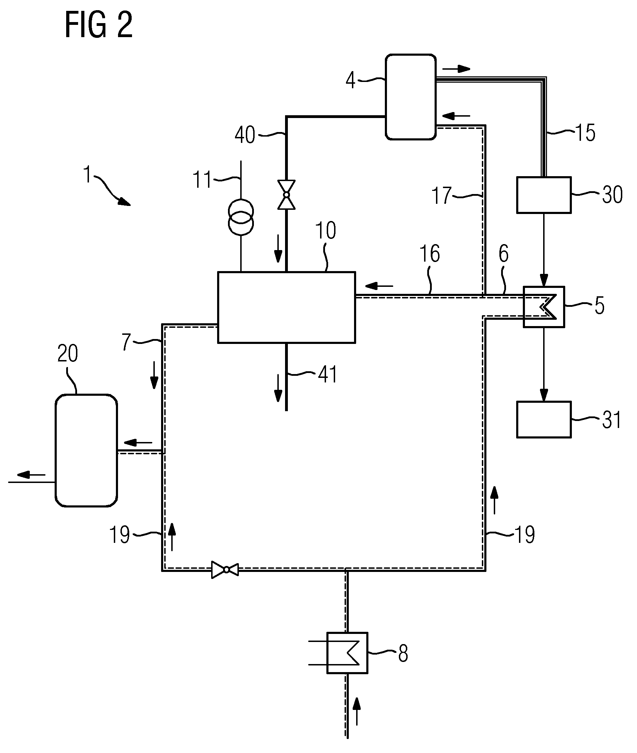

Fig. 2 zeigt eine weitere Ausführungsform des erfindungsgemäßen Dampfkraftwerkes in einer schematischen Darstellung. Im Vergleich zu der in Fig. 1 gezeigten Darstellung unterscheidet die sich in Fig. 2 gezeigte Ausführungsform lediglich dahingehend, dass der Wärmeübertrag mittels des regenerativen Luftvorwärmers 5 nicht auf unkonditionierte Frischluft aus einer Frischluftzuleitung 18 sondern auf bereits thermisch konditionierte Luft erfolgt. Die Luft hat ausführungsgemäß zur thermischen Konditionierung bereits in einem Wärmetauscher 8, besonders bevorzugt einen dampfbetriebenen Luftvorwärmer 8, einen Wärmeeintrag erhalten. Ausführungsgemäß kann der Wärmeübertrag auf Frischluft erfolgen.

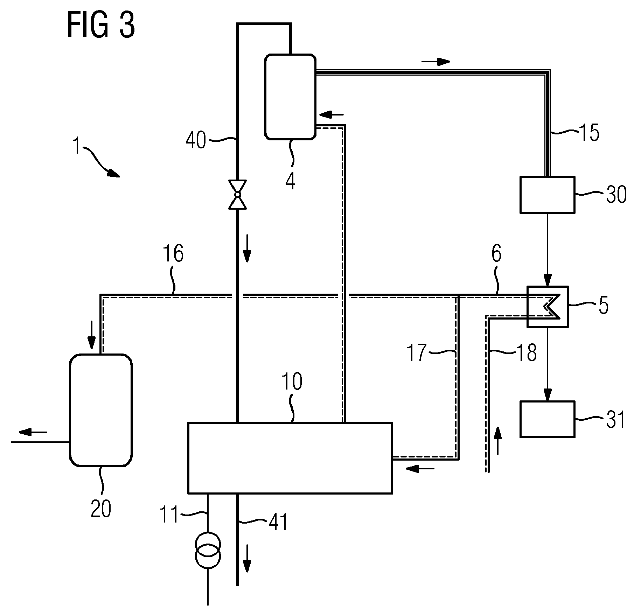

Fig. 3 zeigt eine weitere Ausführungsform des erfindungsgemäßen Dampfkraftwerks in einer schematischen Schaltungsansicht. Die in Fig. 3 gezeigte Ausführungsform unterscheidet sich in Bezug auf die in Fig. 1 gezeigte Ausführungsform der Erfindung dahingehend, dass nicht primär Luft aus einer Primärluftzuleitung 16 der Hochtemperatur-Batterie 10 zugeführt wird, sondern Sekundärluft aus der Sekundärluftzuleitung 17. Entsprechend dieser Ausführungsform ist also die Hochtemperatur-Batterie 10 in der Sekundärluftzuleitung 17 der Brennkammer 4 stromaufwärts vorgeschaltet. Damit steht zwar der gesamte thermische Inhalt der Primärluft aus der Primärluftzuleitung 16 der Kohlenstaubaufbereitung in der Kohlenmühle 20 zur Verfügung, jedoch wird nun die thermische Energie für den Betrieb der Hochtemperatur-Batterie 10 aus der Sekundärluft in der Sekundärluftzuleitung 17 entnommen. Dies kann bei Betrieb der Hochtemperatur-Batterie insofern Vorteile aufweisen, als dass die durch den Betrieb der Hochtemperatur-Batterie 10 erzeugte Wärme zusätzlich der Verbrennungsluft zur Verfügung gestellt werden kann.

Die in den beispielhaft gezeigten Ausführungsformen der Erfindung gemäß Fig. 1 bis Fig. 3 beanspruchten Merkmale sollen für sich alleine wie auch in ihrer Gesamtheit zusammen mit den anderen dargestellten Merkmalen beansprucht werden.

Weitere Ausführungsformen ergeben sich aus den Unteransprüchen.

## Patentansprüche

1. Dampfkraftwerk (1) umfassend einen Dampfkessel (2), der von einer Brennervorrichtung in einer Brennkammer (4) befeuert wird, sowie einen Luftvorwärmer (5), der geeignet ist, thermische Energie aus dem Rauchgas der Brennkammer (4) zu entnehmen, um sie auf einen ersten Luftstrom (6) zu übertragen, welcher erste Luftstrom (6) der Brennkammer (4) zum Teil als Verbrennungsluft wieder zugeführt wird,
**dadurch gekennzeichnet, dass** das Dampfkraftwerk (1) weiterhin eine Hochtemperatur-Batterie (10) umfasst, die ebenfalls mit Luft aus dem ersten Luftstrom (6) versorgt wird.

2. Dampfkraftwerk gemäß Anspruch 1,
**dadurch gekennzeichnet, dass** die Luft aus dem ersten Luftstrom (6), welche die Hochtemperatur-Batterie (10) versorgt, bei regulärem Betrieb der Brennervorrichtung ein Temperaturniveau von wenigstens 250 °C, bevorzugt von wenigstens 300 °C aufweist.

3. Dampfkraftwerk gemäß einem der vorhergehenden Ansprüche,
**dadurch gekennzeichnet, dass** die Luft aus dem ersten Luftstrom (6), mit welcher die Hochtemperatur-Batterie (10) versorgt wird, nach thermischer Wechselwirkung mit der Hochtemperatur-Batterie (10), insbesondere nach einer thermischen und/oder chemischen Wechselwirkung, einer Kohlenmühle (20) zugeführt wird.

4. Dampfkraftwerk gemäß einem der vorhergehenden Ansprüche 2 oder 3,
**dadurch gekennzeichnet, dass** die Kohlenmühle (20) mit einem zweiten Luftstrom (7) versorgt wird, welcher ein relativ geringeres Temperaturniveau als der erste Luftstrom (6) aufweist.

5. Dampfkraftwerk gemäß Anspruch 4,
**dadurch gekennzeichnet, dass** der erste Luftstrom (6) und der zweiten Luftstrom (7) vor Zuführung in die Kohlenmühle miteinander vermischt werden.

6. Dampfkraftwerk gemäß einem der vorhergehenden Ansprüche 2 bis 5,
**dadurch gekennzeichnet, dass** eine strömungstechnische Regelung vorgesehen ist, die gewährleistet, dass die Temperatur innerhalb der Kohlenmühle (20) nach Mischung von erstem Luftstrom (6) und zweitem Luftstrom (7) nicht mehr als um 50 °C, bevorzugt nicht mehr als um 20 °C schwankt.

7. Dampfkraftwerk gemäß einem der Ansprüche 4 bis 6,
**dadurch gekennzeichnet, dass** der zweite Luftstrom (7) vor Zuführung zur Kohlenmühle (20) durch einen Wärmetauscher (8), insbesondere einem dampfbetriebenen Luftvorwärmer (8) konditioniert wird.

8. Dampfkraftwerk gemäß Anspruch 7,
**dadurch gekennzeichnet, dass** der Wärmetauscher (8) dazu ausgebildet ist, die Luft thermisch zu konditionieren, insbesondere die Luft vorzuwärmen, die dem Luftvorwärmer (5) als erster Luftstrom (6) und nachfolgend der Brennkammer (4) als Verbrennungsluft zugeführt wird.

9. Dampfkraftwerk gemäß Anspruch 1,
**dadurch gekennzeichnet, dass** die Luft aus dem ersten Luftstrom (6) zur Versorgung der Hochtemperatur-Batterie (10) zunächst der Hochtemperatur-Batterie (10) und nach Wechselwirkung mit dieser, insbesondere nach thermischer und/oder chemischer Wechselwirkung mit dieser, der Brennkammer (4) als Verbrennungsluft zugeführt wird.

10. Dampfkraftwerk gemäß einem der vorhergehenden Ansprüche,
**dadurch gekennzeichnet, dass** die Hochtemperatur-Batterie (10) eine Metall-Luft-Batterie (10) ist, die insbesondere Luftsauerstoff in einem Entladebetrieb durch Reduktion verbraucht.

11. Dampfkraftwerk gemäß einem der vorhergehenden Ansprüche,
**dadurch gekennzeichnet, dass** die Hochtemperatur-Batterie (10) dazu ausgebildet ist, mit Wasserdampf versorgt zu werden, der durch die Verbrennungswärme in der Brennkammer (4) thermisch aufbereitet wurde.

12. Verfahren zum Betrieb eines Dampfkraftwerkes (1) gemäß einem der Ansprüche 1 bis 11,
**dadurch gekennzeichnet, dass** die Hochtemperatur-Batterie (10) in einem Betriebszustand mit Luft aus dem ersten Luftstrom (6) versorgt wird.

13. Verfahren gemäß Anspruch 12,
**dadurch gekennzeichnet, dass** die Versorgung der Hochtemperatur-Batterie (10) mit Luft aus dem ersten Luftstrom (6) gesteuert bzw. geregelt in Abhängigkeit von dem Betriebszustand der Hochtemperatur-Batterie (10) erfolgt.

## Claims

1. Steam power station (1), comprising a steam boiler (2), which is fired by a burner device in a combustion chamber (4), and also an air preheater (5) which is suitable for extracting thermal energy from the flue gas of the combustion chamber (4) in order to transfer it to a first air flow (6), which first air flow (6) is fed again in part to the combustion chamber (4) as combustion air,
**characterized in that**
the steam power station (1) furthermore comprises a high-temperature battery (10) which is also supplied with air from the first air flow (6).

2. Steam power station according to Claim 1,
**characterized in that**
the air from the first air flow (6), which supplies the high-temperature battery (10), has a temperature level of at least 250°C, preferably of at least 300°C, during normal operation of the burner device.

3. Steam power station according to one of the preceding claims,
**characterized in that**
the air from the first air flow (6), with which the high-temperature battery (10) is supplied, is fed to a coal mill (20) after thermal interaction with the high-temperature battery (10), especially after a thermal and/or chemical interaction.

4. Steam power station according to one of the preceding Claims 2 or 3,
**characterized in that**
the coal mill (20) is supplied with a second air flow (7) which has a relatively lower temperature level than the first air flow (6).

5. Steam power station according to Claim 4,
**characterized in that**
the first air flow (6) and the second air flow (7) are intermixed before being fed into the coal mill.

6. Steam power station according to one of the preceding Claims 2 to 5,
**characterized in that**
provision is made for a fluidic control which ensures that the temperature inside the coal mill (20) fluctuates not more than by 50°C, preferably not more than by 20°c, after the mixing of the first air flow (6) and the second air flow (7).

7. Steam power station according to one of Claims 4 to 6, **characterized in that**
the second air flow (7) is conditioned by means of a heat exchanger (8), especially a steam-operated air preheater (8), before being fed to the coal mill (20).

8. Steam power station according to Claim 7,
**characterized in that**
the heat exchanger (8) is designed for thermally conditioning the air, especially for preheating the air, which is fed to the air preheater (5) as the first air flow (6) and subsequently fed to the combustion chamber (4) as combustion air.

9. Steam power station according to Claim 1,
**characterized in that**
the air from the first air flow (6) for the supply of the high-temperature battery (10) is initially fed to the high-temperature battery (10) and after interaction with this, especially after thermal and/or chemical interaction with this, is fed to the combustion chamber (4) as combustion air.

10. Steam power station according to one of the preceding claims,
**characterized in that**
the high-temperature battery (10) is a metal-air battery (10) which especially consumes air oxygen by reduction during a discharging operation.

11. Steam power station according to one of the preceding claims,
**characterized in that**
the high-temperature battery (10) is designed for being supplied with steam which has been thermally processed by means of the combustion heat in the combustion chamber (4).

12. Method for operating a steam power station (1) according to one of Claims 1 to 11,
**characterized in that**
the high-temperature battery (10) in an operating state is supplied with air from the first air flow (6).

13. Method according to Claim 12,
**characterized in that**
the supplying of the high-temperature battery (10) with air from the first air flow (6) is carried out in an open-loop or closed-loop controlled manner as a function of the operating state of the high-temperature battery (10).

## Revendications

1. Centrale (1) thermique à vapeur comprenant une chaudière (2) à vapeur, qui est chauffée par un dispositif de brûleur dans une chambre de combustion (4), ainsi qu'un préchauffeur (5) d'air propre à prélever de l'énergie thermique du gaz de fumée de la chambre de combustion (4) pour la transmettre à un premier courant (6) d'air, lequel premier courant (6) d'air est retourné à la chambre de combustion (4) en partie comme air de combustion,
**caractérisée en ce que**
la centrale (1) thermique à vapeur comprend en outre un accumulateur (10) à haute température, qui est alimentée également par de l'air du premier courant d'air.

2. Centrale thermique à vapeur suivant la revendication 1, **caractérisée en ce que** l'air du premier courant (6) d'air, qui alimente l'accumulateur (10) à haute température, a, en fonctionnement régulier du dispositif de brûleur, un niveau de température d'au moins 250°C, de préférence d'au moins 300°C.

3. Centrale thermique à vapeur suivant l'une des revendications précédentes,
**caractérisée en ce que** l'air du premier courant (6) d'air, par lequel l'accumulateur (10) à haute température est alimenté, est envoyé après une interaction thermique avec l'accumulateur (10) à haute température, notamment après une interaction thermique et/ou chimique, à un broyeur (20) de charbon.

4. Centrale thermique à vapeur suivant l'une des revendications précédentes 2 ou 3,
**caractérisée en ce que** le broyeur (20) de charbon est alimenté par un deuxième courant (7) d'air, qui a un niveau de température plus bas que le premier courant (6) d'air.

5. Centrale thermique à vapeur suivant la revendication 4, **caractérisée en ce que** le premier courant (6) d'air et le deuxième courant (7) d'air sont mélangés l'un à l'autre avant l'envoi au broyeur à charbon.

6. Centrale thermique à vapeur suivant l'une des revendications précédentes 2 à 5,
**caractérisée en ce qu'**il est prévu une régulation en technique des fluides, qui assure que la température dans le broyeur (20) de charbon, après mélange du premier courant (6) d'air et du deuxième courant (7) d'air, ne fluctue pas de plus de 50°C, de préférence ne fluctue pas de plus de 20°C.

7. Centrale thermique à vapeur suivant l'une des revendications précédentes 4 à 6,
**caractérisée en ce que** le deuxième courant (7) d'air est, avant l'envoi au broyeur (20) de charbon, conditionné par un échangeur de chaleur (8), notamment par un préchauffeur (8) d'air fonctionnant à la vapeur.

8. Centrale thermique à vapeur suivant la revendication 7, **caractérisée en ce que** l'échangeur de chaleur (8) est constitué pour conditionner thermiquement l'air, notamment pour préchauffer l'air qui est envoyé au préchauffeur (5) d'air comme premier courant (6) d'air et ensuite à la chambre de combustion (4) comme air de combustion.

9. Centrale thermique à vapeur suivant la revendication 1,
**caractérisée en ce que** l'air du premier courant (6) d'air est, pour l'alimentation de l'accumulateur (10) à haute température, envoyé d'abord à l'accumulateur (10) à haute température, et, après interaction avec celui-ci, notamment après interaction thermique et/ou chimique avec celui-ci, à la chambre de combustion (4) comme air de combustion.

10. Centrale thermique à vapeur suivant l'une des revendications précédentes,
**caractérisée en ce que** l'accumulateur (10) à haute température est un accumulateur (10) métal-air, qui consomme par réduction, notamment de l'oxygène de l'air, dans un fonctionnement en décharge.

11. Centrale thermique à vapeur suivant l'une des revendications précédentes,
**caractérisée en ce que** l'accumulateur (10) à haute température est constitué pour être alimenté en vapeur d'eau, qui a été préparée thermiquement par la chaleur de combustion dans la chambre de combustion (4).

12. Procédé pour faire fonctionner une centrale (1) thermique à vapeur suivant l'une des revendications 1 à 11,
**caractérisé en ce que** l'on alimente l'accumulateur (10) à haute température dans un état de fonctionnement par de l'air du premier courant (6) d'air.

13. Procédé suivant la revendication 12,
**caractérisé en ce que** l'on effectue l'alimentation de l'accumulateur (10) à haute température en air du premier courant (6) d'air de manière commandée ou régulée en fonction de l'état de fonctionnement de l'accumulateur (10) à haute température.
